(19) Europäisches Patentamt / European Patent Office / Office européen des brevets

(11) **EP 3 232 626 B1**

(12) **FASCICULE DE BREVET EUROPEEN**

(45) Date de publication et mention de la délivrance du brevet:
**03.03.2021 Bulletin 2021/09**

(51) Int Cl.:
***H04L 27/26*** *(2006.01)* ***H04L 1/06*** *(2006.01)*

(21) Numéro de dépôt: **17166062.4**

(22) Date de dépôt: **11.04.2017**

(54) **ÉMETTEUR POUR SYSTÈME FBMC À CODAGE SPATIO-TEMPOREL DE TYPE ALAMOUTI PAR BLOCS**

SENDER FÜR FBMC-SYSTEM MIT RAUM-ZEIT-BLOCKKODIERVERFAHREN VOM TYP ALAMOUTI

TRANSMITTER FOR FBMC SYSTEM WITH ALAMOUTI SPACE-TIME BLOCK CODING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.04.2016 FR 1653276**

(43) Date de publication de la demande:
**18.10.2017 Bulletin 2017/42**

(73) Titulaire: **Commissariat à l'Energie Atomique et aux Energies Alternatives 75015 Paris (FR)**

(72) Inventeur: **DORE, Jean-Baptiste 38120 Fontanil-Cornillon (FR)**

(74) Mandataire: **Brevalex 56, Boulevard de l'Embouchure B.P. 27519 31075 Toulouse Cedex 2 (FR)**

(56) Documents cités:
**US-A1- 2014 348 252**

• MARKKU RENFORS ET AL: "A block-Alamouti scheme for filter bank based multicarrier transmission", WIRELESS CONFERENCE (EW), 2010 EUROPEAN, IEEE, PISCATAWAY, NJ, USA, 12 avril 2010 (2010-04-12), pages 1031-1037, XP031688570, ISBN: 978-1-4244-5999-5
• R Zakaria ET AL: "On interference cancellation in Alamouti coding scheme for filter bank based multicarrier systems", , 27 août 2013 (2013-08-27), XP055324856, Extrait de l'Internet: URL:http://ieeexplore.ieee.org/iel7/662968 2/6629683/06629689.pdf [extrait le 2016-11-30]

**EP 3 232 626 B1**

**Description**

**DOMAINE TECHNIQUE**

La présente invention concerne de manière générale le domaine des systèmes de télécommunication utilisant une modulation multi-porteuse à banc de filtres, encore dénommés systèmes FBMC (Filter Bank Multi-Carrier). Il concerne également les systèmes de télécommunication MISO (Multiple Input Single Output) voire MIMO (Multiple Input Multiple Output) utilisant un codage spatio-temporel.

**ÉTAT DE LA TECHNIQUE ANTÉRIEURE**

Les systèmes de télécommunication utilisant une modulation multi-porteuse sont bien connus dans l'état de la technique. Le principe d'une telle modulation consiste à diviser la bande de transmission en une pluralité de sous-canaux fréquentiels associés à des sous-porteuses et à moduler chacune de ces sous-porteuses par les données à transmettre.

La modulation multi-porteuse la plus répandue est sans aucun doute la modulation OFDM (Orthogonal Frequency Division Multiplexing). Toutefois, l'occupation spectrale d'un signal OFDM étant sensiblement plus importante que la bande de sous-porteuses qu'il utilise en raison de l'étalement des lobes secondaires, la modulation OFDM n'est pas une solution optimale pour des applications nécessitant de forts taux de réjection hors bande.

La modulation par banc de filtres ou FBMC (Filter Bank Multi Carrier) est une modulation multi-porteuse permettant d'obtenir une meilleure localisation spectrale dans la bande de sous-porteuses. Elle est en outre l'une des solutions possibles pour les systèmes de télécommunication de la cinquième génération.

Le principe de la modulation FBMC est basé sur une synthèse par banc de filtres à l'émission et une analyse par banc de filtres à la réception, le produit de la fonction de transfert d'un filtre à l'émission par la fonction de transfert du filtre correspondant à la réception étant égale à la fonction de transfert du filtre de Nyquist.

Les systèmes FBMC sont classiquement implémentés dans le domaine temporel. La structure d'un système FBMC implémenté dans le domaine temporel a été décrite en détail dans l'article de B. Hirosaki intitulé « An orthogonally multiplexed QAM system using the discrete Fourier transform » publié dans IEEE Trans on Comm., vol. 29 No. 7, pp. 982-989, Juillet 1981, ainsi que dans l'article de P. Siohan et al. intitulé « Analysis and design of OFDM/OQAM systems based on filterbank theory" publié dans IEEE Trans. on signal processing, vol. 50, No 5, pp. 1170-1183, Mai 2002. Les systèmes FBMC implémentés dans le domaine temporel font appel à des réseaux de filtres polyphasés d'où leur dénomination PPN-FBMC (Polyphase Network FBMC).

Plus récemment, il a été proposé d'implémenter un système FBMC dans le domaine fréquentiel comme décrit dans le document de M. Bellanger et al. intitulé « FBMC physical layer : a primer » disponible sur le site www.ict-phydyas.org. Les systèmes FBMC implémentés dans le domaine fréquentiel font appel à un étalement spectral d'où leur dénomination de FS-FBMC (Frequency Spread FBMC).

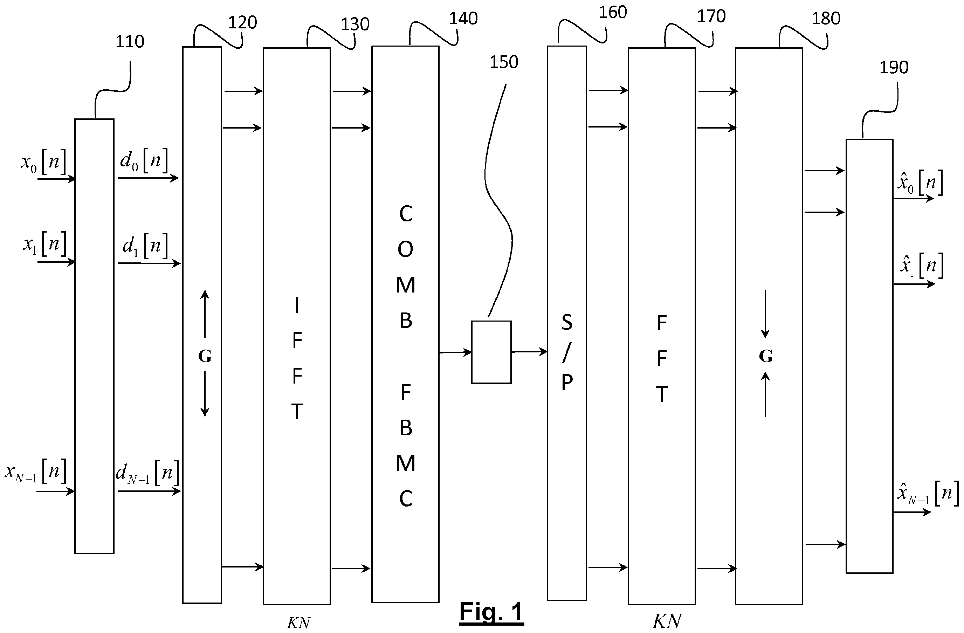

La structure d'un système FS-FBMC est représentée en Fig. 1.

Au niveau de l'émetteur, les symboles de modulation QAM à transmettre avec une cadence $Nf$ avec $f = 1/T$ sont regroupés par blocs de taille $N$, $x_0[n]$, .... $x_{N-1}[n]$ où $n$ est l'indice temporel du bloc. Chaque bloc de $N$ symboles est fourni en parallèle à $N$ voies d'entrée d'un module de prétraitement, 110, dit prétraitement OQAM (Offset QAM). Ce module de prétraitement a pour fonction de démultiplexer la partie réelle et la partie imaginaire des symboles d'entrée avec une fréquence $2f$ de sorte que deux échantillons transmis au même instant sur deux sous-canaux successifs ou deux échantillons transmis en deux instants successifs sur un même sous-canal sont l'un réel et l'autre imaginaire. Chacune des $N$ voies de sortie du module de prétraitement 110 correspond à un sous-canal.

Chaque sous-canal est ensuite étalé sur un intervalle de $2K - 1$ sous-porteuses adjacentes, centré sur une sous-porteuse centrale du sous-canal. Plus précisément, chaque donnée OQAM est étalée sur $2K - 1$ sous-porteuses adjacentes et pondérée par la valeur (réelle) prise par la fonction de transfert du filtre de synthèse à la fréquence correspondante.

On a désigné par 120 le module d'étalement en fréquence et de filtrage par le filtre prototype. Chaque donnée OQAM $d_i[n]$ en entrée du module 120 est étalée sur $2K - 1$ sous-porteuses adjacentes pour donner :

$$\breve{d}_{i,k}[n] = d_i[n]G_k, \ k = -K+1, \ldots, 0, ..K-1 \tag{1}$$

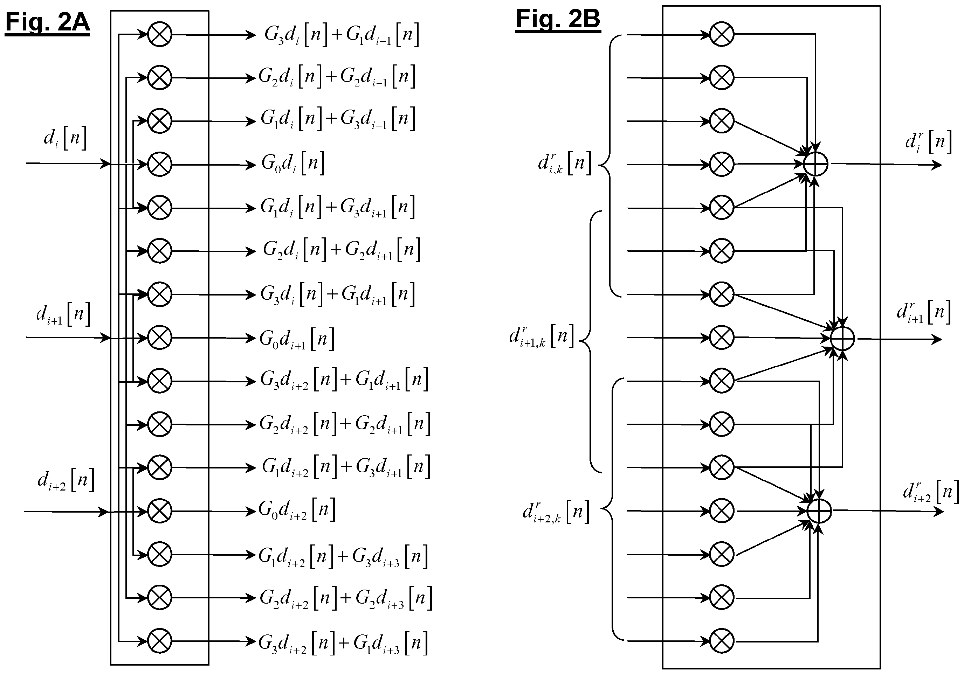

Les données de même parité $i$ et $i+2$ sont séparées spectralement et celles de parités contraires $i$ et $i + 1$ se chevauchent comme représenté en Fig. 2A. Ce chevauchement n'engendre toutefois pas d'interférence puisque deux données de parités contraires sont nécessairement respectivement situées sur l'axe réel et l'axe imaginaire et séparées de $T/2$. Par exemple, en Fig. 2A, les données $d_i[n]$ et $d_{i+2}[n]$ sont des valeurs réelles (représentées en traits continus)

**2**

alors que la donnée $d_{i+1}[n]$ est une valeur imaginaire (représentée par des traits en pointillés). Les valeurs imaginaires sont présentées à l'entrée du module de IFFT avec un décalage de $T/2$ par rapport aux valeurs réelles. L'orthogonalité dans le plan complexe est conservée par le filtrage par le filtre prototype étant donné que les coefficients $G_k$ sont réels.

Les données étalées en fréquence et filtrées font ensuite l'objet d'une IFFT de taille $KN$ en 130.

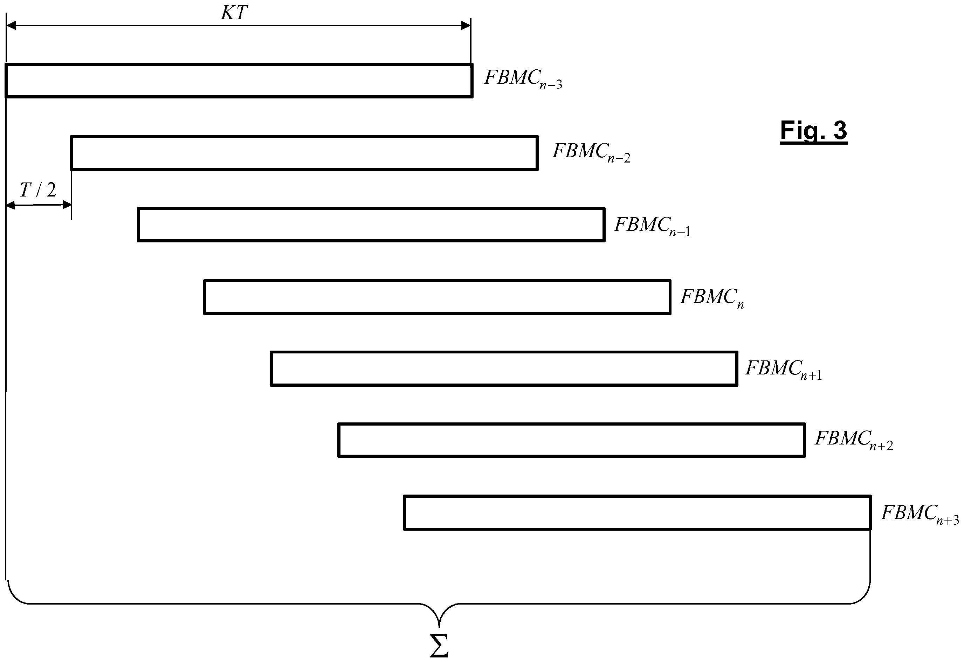

Le bloc d'échantillons temporels en sortie de la IFFT est combiné au moyen du module de combinaison 140 comme indiqué en Fig. 3. L'ensemble des échantillons en sortie de l'IFFT représente un symbole FBMC dans le domaine temporel, deux symboles FBMC successifs étant décalés de $T/2$ (autrement dit de $N/2$ échantillons) et les symboles FBMC ayant chacun une durée $KT$ (autrement dit une taille de $KN$ échantillons). Un symbole FBMC est combiné dans le module 140 avec les $K$-1 symboles FBMC précédents et $K$-1 symboles FBMC suivants. Pour cette raison, $K$ est encore appelé facteur de chevauchement (*overlapping factor*) ou d'entrelacement. On notera qu'un échantillon en sortie du module de combinaison 140 est la somme de $2K$ - 1 échantillons de symboles FBMC consécutifs.

Le signal ainsi obtenu est ensuite translaté sur une fréquence porteuse.

Après transmission sur le canal 150, le signal reçu, démodulé en bande de base, est échantillonné par le récepteur à la cadence $Nf$ puis converti en blocs de taille $KN$ par le convertisseur série-parallèle 160.

Une FFT glissante (la fenêtre de la FFT glissant de $N/2$ échantillons entre deux calculs de FFT) de taille $KN$ est effectuée dans le module FFT, 170, sur des blocs de $KN$ échantillons consécutifs en sortie du convertisseur série-parallèle 160.

Les sorties de la FFT sont ensuite soumises à un filtrage et un désétalement spectral dans le module 180. L'opération de désétalement a lieu dans le domaine fréquentiel comme représenté en Fig. 2B. Plus précisément, les échantillons $\breve{d}_{i,k}^{r}[n]$, $k = -K + 1, .... 0,..K$ - 1 correspondant aux $2K$ - 1 fréquences $(i-1)K+1,...iK,... (i+1)K$ -1 de la FFT sont multipliés par les valeurs de la fonction de transfert du filtre d'analyse (translatée en fréquence de celle du filtre prototype) aux fréquences en question et les résultats obtenus sont sommés, soit :

$$d_i^r[n] = \sum_{k=-K+1}^{K-1} G_k \breve{d}_{i,k}^{r}[n] \qquad (2)$$

On notera que, comme en Fig. 2A, l'obtention de données ayant des rangs de même parité, par exemple $d_i^r[n]$ et $d_{i+2}^r[n]$, fait appel à des blocs d'échantillons disjoints alors que ceux de deux rangs consécutifs, de parités inverses, se chevauchent. Ainsi, l'obtention de la donnée $d_{i+1}^r[n]$ fait appel aux échantillons $\breve{d}_{i,k}^{r}[n]$, $k = 1, .., K$ -1 ainsi qu'aux échantillons $\breve{d}_{i+2,k}^{r}[n]$, $k = -K + 1,...,1$.

Le désétalement de données réelles est représenté par des traits continus alors que celui des données imaginaires est représenté par des traits en pointillés.

Les données $d_i^r[n]$ ainsi obtenues sont ensuite fournies à un module de post-traitement 190, effectuant le traitement inverse de celui du module 110, autrement dit une démodulation OQAM. Les symboles QAM sont ainsi restaurés.

La technologie FBMC est l'une des technologies candidates à la cinquième génération des systèmes de télécommunication sans fil. En particulier, celle-ci devrait permettre de répondre aux besoins de fragmentation spectrale et d'asynchronisme de transmission des communications de type machine ou MTC (Machine Type Communication).

L'application de la technologie FBMC aux systèmes de télécommunication à diversité spatiale de type MIMO (Multiple Input Multiple Output) est toutefois beaucoup plus compliquée qu'en OFDM du fait que la transmission FBMC utilise intrinsèquement l'orthogonalité dans le plan complexe pour éliminer l'interférence entre symboles FBMC.

Un codage spatio-temporel par blocs ou STBC (Spatial Time Block Coding) de type Alamouti a été récemment proposé pour un système FBMC dans l'article de M. Renfors et al. intitulé « A block-Alamouti scheme for filter bank based multicarrier transmission » publié dans Proceedings of European Wireless Conference EW 2010, Avril 12-15, 2010, Lucca, Italie. 2010. pp. 1031-1037.

On rappelle tout d'abord qu'un codage Alamouti est un codage STBC (Space Time Block Coding) s'appliquant à une configuration à deux antennes d'émission et une antenne de réception. Sa matrice de codage est donnée par :

$$\mathbf{C} = \begin{pmatrix} x_0 & x_1 \\ -x_1^* & x_0^* \end{pmatrix} \qquad (3)$$

dans laquelle $x_0$ et $x_1$ sont deux symboles complexes (appartenant à un alphabet de modulation) à transmettre. Lors d'une première utilisation du canal (c'est-à-dire un premier intervalle de transmission) les antennes d'émission transmettent respectivement $x_0$ et $x_1$ et, lors d'une seconde utilisation du canal, ces antennes transmettent $-x_1^*$ et $x_0^*$

Les signaux reçus respectivement pendant la première et la seconde utilisation du canal, $y_0$, $y_1$, peuvent alors s'exprimer sous la forme :

$$y_0 = h_0 x_0 + h_1 x_1 + n_0 \qquad (4\text{-}1)$$

$$y_1 = -h_0 x_1^* + h_1 x_0^* + n_1 \qquad (4\text{-}2)$$

où $h_0, h_1$ sont respectivement le coefficient complexe du premier canal élémentaire entre la première antenne d'émission et l'antenne de réception, et le coefficient complexe du second canal élémentaire entre la seconde antenne d'émission et l'antenne de réception, et où $n_0, n_1$ sont des échantillons de bruit supposés additifs, indépendants et issus d'un même processus gaussien blanc centré.

En supposant le canal connu, le récepteur estime les symboles transmis à partir d'une combinaison des signaux reçus :

$$\hat{x}_0 = \frac{1}{|h_0|^2 + |h_1|^2}\left(h_0^* y_0 + h_1 y_1^*\right) = x_0 + \frac{h_0^* n_0 + h_1 n_1^*}{|h_0|^2 + |h_1|^2} \qquad (5\text{-}1)$$

$$\hat{x}_1 = \frac{1}{|h_0|^2 + |h_1|^2}\left(h_1^* y_0 - h_0 y_1^*\right) = x_1 + \frac{h_1^* n_0 - h_0 n_1^*}{|h_0|^2 + |h_1|^2} \qquad (5\text{-}2)$$

L'article de Renfors précité fait appel à une technique de filtrage adapté, déjà utilisée pour le codage d'Alamouti en présence d'interférence intersymbole, présentée dans l'article de E. Lindskog et al. intitulé « A transmit scheme for channels with intersymbol interférence » publié dans Proc. IEEE of Int'l Conf. on Communications, ICC 2000, pp.307-311, Juin 2000.

Le codage d'Alamouti est effectué par blocs de vecteurs de données d'entrée, un bloc étant constitué d'une séquence de $L$ vecteurs-colonnes et pouvant donc être représenté par une matrice $\overline{\mathbf{X}}$ de taille $N{\times}L$ où $N$ est le nombre de sous-porteuses. Chaque vecteur-colonne de la matrice $\overline{\mathbf{X}}$, soit $\mathbf{X}^m$, $m = 0,...,L-1$, représente ici un vecteur de symboles complexes en sortie du modulateur OQAM. On rappelle qu'en raison de la modulation OQAM, deux éléments adjacents quelconques (selon les lignes ou les colonnes) de la matrice $\overline{\mathbf{X}}$ sont l'un réel et l'autre imaginaire.

Si l'on note $\overline{\mathbf{X}}_0$ et $\overline{\mathbf{X}}_1$ deux blocs consécutifs, la matrice de codage d'Alamouti par blocs, telle que proposée dans l'article de Renfors peut s'exprimer sous la forme :

$$\overline{\mathbf{C}} = \begin{pmatrix} \overline{\mathbf{X}}_0 & \overline{\mathbf{X}}_1 \\ -\overline{\mathbf{X}}_1^* \mathbf{T} & \overline{\mathbf{X}}_0^* \mathbf{T} \end{pmatrix} \qquad (6)$$

Les colonnes-bloc de la matrice-bloc représentent ici les antennes et les lignes-bloc représentent les utilisations du canal. Dans chacun des blocs, les lignes représentent les sous-porteuses et les colonnes représentent le temps. $\mathbf{T}$ est une matrice anti-diagonale de taille $L{\times}L$ dont tous les éléments anti-diagonaux sont égaux à 1, et traduit ainsi un retournement temporel. Ainsi, si $\overline{\mathbf{X}}$ est une séquence de vecteurs $\mathbf{X}^0, \mathbf{X}^1,...,\mathbf{X}^{L-1}$ le bloc $\mathbf{XT}$ est constitué de la séquence $\mathbf{X}^{L-1}, \mathbf{X}^{L-2},...,\mathbf{X}^0$.

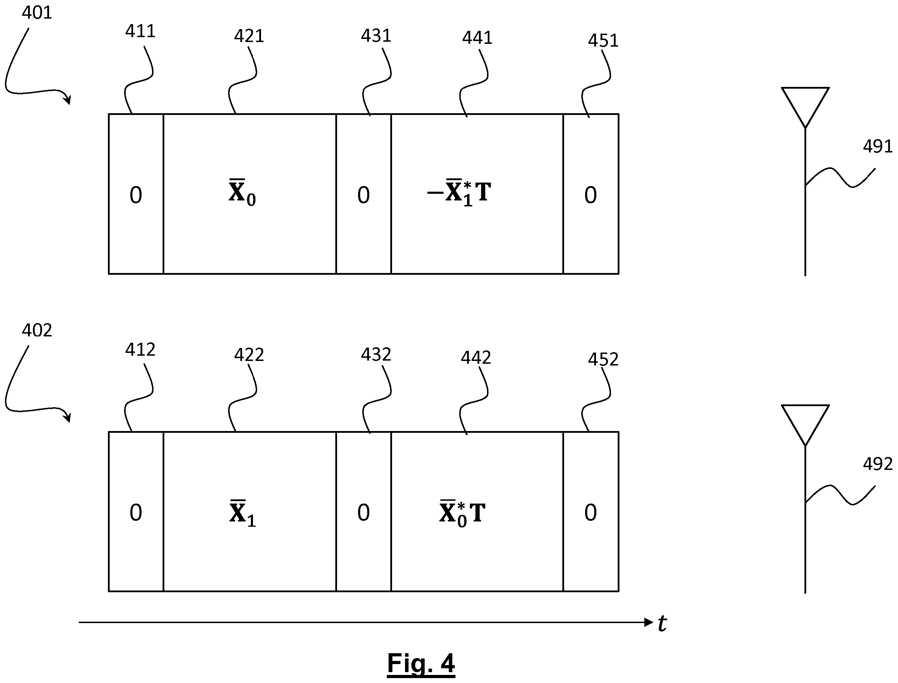

La Fig. 4 représente de manière schématique une séquence de blocs de symboles émis par un émetteur FBMC avec un codage d'Alamouti par blocs.

Une première séquence de blocs, 401, est formée par un premier bloc de garde 411, un premier bloc de $L$ vecteurs de symboles, $\overline{\mathbf{X}}_0$, 421, un second bloc de garde, 431, un premier bloc transformé, $-\overline{\mathbf{X}}_1^*\mathbf{T}$, 441, constitué de $L$ vecteurs de symboles, suivi par un troisième bloc de garde 451.

Une seconde séquence de blocs, 402, est formé par un premier bloc de garde, 421, un second bloc constitué de $L$ vecteurs de symboles, $\overline{\mathbf{X}}_1$, 422, un second bloc de garde, 432, un second bloc transformé $\overline{\mathbf{X}}_0^*\mathbf{T}$, 442, constitué de $L$ vecteurs de symboles, suivi d'un troisième bloc de garde, 452.

Les blocs de garde sont constitués de symboles nuls et ont pour objet d'isoler les blocs successifs de l'interférence générée par les blocs adjacents.

La première séquence de blocs est transmise par la première antenne 491 après modulation FBMC. Le signal obtenu en sortie du modulateur FBMC peut être considéré comme une séquence de symboles FBMC se chevauchant temporellement, comme expliqué en relation avec la Fig. 3. Le signal ainsi obtenu est transmis sur la première antenne après avoir été translaté en bande RF.

De même, la seconde séquence de blocs est transmise par la seconde antenne 492 après avoir été modulée par un second modulateur FBMC de structure identique au premier.

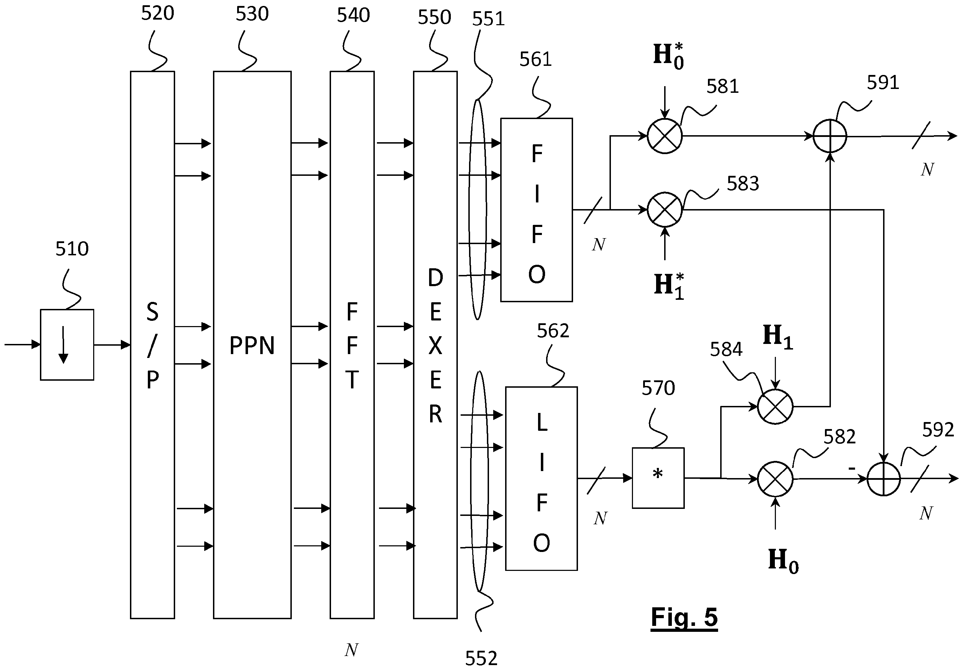

La Fig. 5 représente schématiquement l'architecture d'un récepteur FBMC permettant de recevoir les séquences de blocs de symboles émises par l'émetteur de la Fig. 4. Il est essentiel de noter que ce récepteur FBMC présente une architecture classique (implémentation temporelle) et non une architecture FS-FBMC (implémentation fréquentielle).

Le récepteur comprend un module d'échantillonnage 510 pour échantillonner le signal reçu en bande de base à la cadence $Nf$ où $N$ est le nombre de sous-porteuses et $f$ est la fréquence des symboles FBMC. Les échantillons sont regroupés sous forme de blocs de taille $N$ par un convertisseur série-parallèle 520.

Chaque bloc est filtré par un transmultiplexeur constitué par une batterie de $N$ filtres polyphasés (PPN), 530, puis soumis une FFT de taille $N$, dans le module de FFT 540, opérant sur les $N$ sorties de ces filtres.

Le récepteur est supposé être synchronisé sur les symboles FBMC, autrement dit le début d'une fenêtre FFT coïncide avec le premier échantillon d'un symbole FBMC (émis par l'une ou l'autre des antennes d'émission). En outre, le récepteur est supposé être synchronisé sur les instants d'utilisation du canal de sorte qu'il connaît les instants de réception des premier et second blocs

Un démultiplexeur 550 fournit les vecteurs en sortie de la FFT sur une première sortie 551 lors de la première utilisation du canal et sur une seconde sortie 552 lors de la seconde utilisation du canal. Les $L$ vecteurs (de taille $N$) générés séquentiellement sur la première sortie sont stockés dans une première mémoire tampon 561 configurée sous la forme d'un buffer FIFO (*First In First Out*). Les $L$ vecteurs générés séquentiellement sur la seconde sortie sont également stockés dans une seconde mémoire tampon 562, configurée sous la forme d'un buffer LIFO (*Last In First Out*). Le module de conjugaison 570 lit ainsi les $L$ vecteurs dans l'ordre inverse de leur ordre de stockage, de sorte à effectuer un retournement temporel, et effectue une conjugaison complexe de chacun de ces vecteurs.

Chaque élément d'un vecteur généré sur la première sortie est multiplié en 581 par le conjugué complexe du coefficient du premier canal élémentaire entre la première antenne d'émission et l'antenne de réception, à la fréquence de la sous-porteuse portant l'élément en question (l'opération est symbolisée ici par une multiplication du vecteur en sortie de la mémoire tampon par la matrice $\mathbf{H}_0^*$ définie ci-après) et en 583 par le conjugué complexe du coefficient du second canal élémentaire entre la seconde antenne d'émission et l'antenne de réception, à la même fréquence de sous-porteuse (l'opération est symbolisée ici par une multiplication du vecteur d'échantillons en sortie de FFT par la matrice $\mathbf{H}_1^*$). Il est entendu que les matrices $\mathbf{H}_0$ et $\mathbf{H}_1$ sont ici de taille $N\times N$ et représentent ici les coefficients des canaux élémentaires pour les $N$ sous-porteuses. Les matrices $\mathbf{H}_0$ et $\mathbf{H}_1$ sont diagonales. On suppose les matrices $\mathbf{H}_0$ et $\mathbf{H}_1$ constantes sur la durée de la séquence (hypothèse de *flat fading* dans le temps).

De manière similaire, chaque élément d'un vecteur généré sur la seconde sortie est multiplié en 582 par le coefficient du canal entre la première antenne d'émission et l'antenne de réception à la fréquence de la sous-porteuse portant l'élément en question (opération symbolisée par une multiplication du vecteur en sortie de la FFT par la matrice $\mathbf{H}_0$) et en 584 par le coefficient du canal entre la seconde antenne d'émission et l'antenne de réception à la fréquence de la même sous-porteuse (opération symbolisée par une multiplication du vecteur en sortie de la FFT par la matrice $\mathbf{H}_1$).

Les vecteurs en sortie du multiplieur 581 sont sommés, élément à élément, avec ceux en sortie du multiplieur 584, dans le sommateur, 591. Les vecteurs successifs en sortie du sommateur 591 sont ensuite fournis à un premier démodulateur OQAM (non représenté).

De manière similaire, les vecteurs en sortie du multiplieur 583 sont soustraits, élément à élément, à ceux en sortie du multiplieur 582, dans le sommateur 592. Les vecteurs successifs en sortie du sommateur 592 sont ensuite fournis à un second démodulateur OQAM (non représenté).

Autrement dit, si l'on note $\overline{\mathbf{Y}}_0$ et $\overline{\mathbf{Y}}_1$ les matrices de taille $N{\times}L$ représentant la séquence de L vecteurs-colonne en sortie de la FFT, respectivement lors de la première et de la seconde utilisation du canal, les estimations des vecteurs de symboles $\overline{\mathbf{X}}_0$ et $\overline{\mathbf{X}}_1$ sont obtenues par :

$$\widehat{\overline{\mathbf{X}}}_0 = \frac{1}{Tr\left(\mathbf{H}_0^*\mathbf{H}_0 + \mathbf{H}_1^*\mathbf{H}_1\right)}\left(\mathbf{H}_0^*\overline{\mathbf{Y}}_0 + \mathbf{H}_1\overline{\mathbf{Y}}_1^*\mathbf{T}\right) \qquad (7\text{-}1)$$

$$\widehat{\overline{\mathbf{X}}}_1 = \frac{1}{Tr\left(\mathbf{H}_0^*\mathbf{H}_0 + \mathbf{H}_1^*\mathbf{H}_1\right)}\left(\mathbf{H}_1^*\overline{\mathbf{Y}}_0 - \mathbf{H}_0\overline{\mathbf{Y}}_1^*\mathbf{T}\right) \qquad (7\text{-}2)$$

L'article de M. Renfors et al. intitulé « A block-Alamouti scheme for filter bank based multicarrier transmission » publié dans Proc. of 2010 European Wireless Conf. , pages 1031-1037 décrit un émetteur PPN-FBMC mettant en œuvre un codage d'Alamouti par blocs. La demande US-A-2014/0348252 divulgue un émetteur OFDM-OQAM utilisant un pré-filtrage à l'aide de la fonction impulsionnelle du canal temporellement retournée pour réduire le terme d'interférence imaginaire au niveau du récepteur.

La méthode de réception décrite ci-dessus fonctionne pour un récepteur FBMC implémenté au moyen d'une batterie de filtres polyphasés. Elle n'est pas applicable à un récepteur FS-FBMC comme décrit en relation avec la partie droite de la Fig. 1, étant donné que le filtrage se fait alors en aval de la FFT.

Le but de la présente invention est de proposer une méthode d'émission d'une séquence de blocs de symboles FBMC codée au moyen d'un codage Alamouti par blocs, qui permette une réception très simple par un récepteur FS-FBMC.

## EXPOSÉ DE L'INVENTION

La présente invention est définie par une méthode de transmission FBMC d'au moins un premier et un second blocs de symboles $(\overline{\mathbf{X}}_0, \overline{\mathbf{X}}_1)$, chaque bloc de symboles comprenant une séquence temporelle de L vecteurs de taille N prédéterminée, ladite méthode présentant une première et une seconde voies de modulation FBMC, chaque voie de modulation FBMC étant associée à une antenne et,

- lors d'une première utilisation du canal de transmission, les vecteurs du premier bloc et les vecteurs du second bloc sont respectivement fournis à la première voie de modulation FBMC et à la seconde voie de modulation FBMC, dans l'ordre de ladite séquence temporelle ;
- le premier bloc est transformé en multipliant les vecteurs de ce bloc par un facteur $j^{L-1}$ où L est un nombre pair et en inversant l'ordre temporel de la séquence de vecteurs ainsi obtenus, et le second bloc est transformé en multipliant les vecteurs de ce bloc par un facteur $-(j^{L-1})$ et en inversant l'ordre temporel de la séquence de vecteurs ainsi obtenus ;
- lors d'une seconde utilisation du canal de transmission, les vecteurs des premier et second blocs ainsi transformés sont respectivement fournis à la seconde voie de modulation et à la première voie de modulation FBMC.

Selon une première variante, chaque voie de modulation FBMC comprend avantageusement une étape de prétraitement OQAM fournissant des données alternativement réelles et imaginaires, chaque donnée ainsi obtenue étant étalée sur une pluralité $2K$ - 1 de sous-porteuses adjacentes et filtrée dans le domaine spectral par un filtre prototype pour fournir un vecteur de $KN$ composantes, le vecteur de $KN$ composantes étant soumis à une IFFT de taille $KN$ pour générer un symbole FBMC de $KN$ échantillons, les symboles FBMC consécutifs étant décalés de $N / 2$ échantillons, chaque symbole FBMC étant combiné avec les $K$-1 symboles FBMC précédents et les $K$-1 symboles FBMC suivants pour fournir, après translation en bande RF, un signal d'antenne émis par une antenne associée à ladite voie.

Selon une seconde variante, chaque voie de modulation FBMC comprend une étape de prétraitement OQAM fournissant un vecteur de $N$ composantes alternativement réelles et imaginaires, le vecteur de $N$ composantes étant soumis à une IFFT de taille $N$ pour générer une pluralité sous-canaux, chaque sous-canal étant filtré par un filtre polyphasé, les filtres polyphasés étant des versions translatées en fréquence de $2k/T$ d'un filtre prototype dont la réponse impulsionnelle est de durée $KT$ où $T$ est la période d'échantillonnage, les sorties des filtres polyphasés étant sur-échantillonnées d'un facteur $N/2$ et retardées de 0 à $N$-1 périodes d'échantillonnage avant d'être sommées pour fournir, après translation en bande RF, un signal d'antenne émis par une antenne associée à ladite voie.

Selon un premier exemple avantageux de réalisation, lors de la première utilisation du canal, on fournit un bloc de garde constitué par un nombre prédéterminé de vecteurs nuls aux première et seconde voies de modulation avant de leur fournir respectivement les vecteurs du premier bloc et les vecteurs du second bloc, et

lors de la seconde utilisation du canal, on fournit un bloc de garde constitué par ledit nombre prédéterminé de vecteurs nuls aux première et seconde voies de modulation avant de leur fournir respectivement les vecteurs du second bloc transformé et les vecteurs du premier bloc transformé.

De préférence, le nombre prédéterminé de vecteurs nuls est choisi égal à $K+E$ où $E$ est l'étalement temporel du canal de transmission exprimée en nombre d'échantillons.

Selon un second exemple avantageux de réalisation, lors de la première utilisation du canal, on fournit des premier et second préambules, constitués par un nombre prédéterminé de vecteurs connus du récepteur, aux première et seconde voies de modulation avant de leur fournir respectivement les vecteurs du premier bloc et les vecteurs du second bloc, et

lors de la seconde utilisation du canal, on fournit un bloc de garde constitué par ledit nombre prédéterminé de vecteurs nuls aux première et seconde voies de modulation avant de leur fournir respectivement les vecteurs du second bloc transformé et les vecteurs du premier bloc transformé.

De préférence, ledit nombre prédéterminé est égal à $K+E$ où $E$ est l'étalement temporel du canal de transmission exprimée en nombre d'échantillons.

Le nombre $L$ peut être typiquement une puissance de 2.

L'invention concerne également un émetteur FBMC adapté à transmettre au moins un premier et un second blocs de symboles ($\overline{\mathbf{X}}_0$, $\overline{\mathbf{X}}_1$), chaque bloc de symboles comprenant une séquence temporelle de $L$ vecteurs réels de taille $N$ prédéterminée, des premiers et des seconds moyens de modulation FBMC, respectivement associés à une première et une seconde antenne de transmission, dans lequel :

lors d'une première utilisation du canal de transmission, les vecteurs du premier bloc et les vecteurs du second bloc sont respectivement fournis à la première voie de modulation FBMC et à la seconde voie de modulation FBMC, dans l'ordre de ladite séquence temporelle, et que ledit émetteur comprend :

des premiers moyens de transformation adaptés à transformer le premier bloc en multipliant les vecteurs de ce bloc par un facteur $j^{L-1}$, où $L$ est un nombre pair, et en inversant l'ordre temporel de la séquence de vecteurs ainsi obtenus, et

des seconds moyens de transformation adaptés à transformer le second bloc en multipliant les vecteurs de ce bloc par un facteur $-(j^{L-1})$ et en inversant l'ordre temporel de la séquence de vecteurs ainsi obtenus ;

l'émetteur FBMC étant configuré de manière à ce que, lors d'une seconde utilisation du canal de transmission, les premiers et seconds moyens de transformation fournissent les vecteurs des premier et second blocs ainsi transformés à la seconde voie de modulation et à la première voie de modulation FBMC.

## BRÈVE DESCRIPTION DES DESSINS

D'autres caractéristiques et avantages de l'invention apparaîtront à la lecture de modes de réalisation préférentiels de l'invention faite en référence aux figures jointes parmi lesquelles :

La Fig. 1 représente de manière schématique un système de télécommunication FS-FBMC connu de l'état de la technique ;
La Fig. 2A illustre l'étalement spectral réalisé en amont du module IFFT de la Fig. 1 ;
La Fig. 2B illustre le désétalement spectral réalisé en aval du module FFT dans la Fig. 1 ;
La Fig. 3 illustre la combinaison des symboles FBMC dans la Fig. 1;
La Fig. 4 représente schématiquement l'émission de deux séquences de blocs de symboles par un émetteur FBMC utilisant un codage d'Alamouti par blocs connu de l'état de la technique ;
La Fig. 5 représente schématiquement l'architecture d'un récepteur FBMC permettant de recevoir les séquences de blocs de symboles émises par l'émetteur de la Fig. 4;
La Fig. 6 représente schématiquement l'architecture d'un récepteur FS-FBMC, permettant de recevoir des séquences de blocs de symboles codés par un codage d'Alamouti par blocs ;
La Fig. 7A représente schématiquement l'émission de deux séquences de blocs de symboles par un émetteur FBMC utilisant un premier codage d'Alamouti par blocs, selon un premier exemple de réalisation de l'invention ;
La Fig. 7B représente schématiquement l'émission de deux séquences de blocs de symboles par un émetteur FBMC utilisant un second codage d'Alamouti par blocs, selon un second exemple de réalisation de l'invention;
La Fig. 8 représente schématiquement l'architecture d'un émetteur FS-FBMC, permettant d'émettre des séquences de blocs de symboles selon les Figs. 7A et 7B.

## EXPOSÉ DÉTAILLÉ DE MODES DE RÉALISATION PARTICULIERS

Pour faciliter la compréhension des notations, nous considérerons d'abord un émetteur FS-FBMC, tel que décrit en relation avec la Fig. 1.

A la différence des notations précédentes, les vecteurs-colonnes $\mathbf{X}^m$, $m = 0, .... L$-1, de taille $N$, représenteront dans la suite des vecteurs de données d'entrée, autrement dit des données à l'entrée du modulateur OQAM. Les éléments de ces vecteurs sont donc à valeurs réelles.

Le signal émis par l'émetteur à l'instant $m$ peut être représenté par un vecteur-colonne $\mathbf{Z}^m$ de taille $KN$ dont les éléments sont des échantillons à la fréquence $Nf$. Le vecteur $\mathbf{Z}^m$ peut s'exprimer en fonction des vecteurs $\mathbf{X}^{m-(K-1)},...,\mathbf{X}^m,...,\mathbf{X}^{m+(K-1)}$ de données d'entrée, soit :

$$\mathbf{Z}^m = \mathbf{F}^H\mathbf{G}\left(\mathbf{X}^m \odot \mathbf{M}^m\right) + \sum_{p=1}^{K-1}\mathbf{Q}_{\frac{pN}{2}}\mathbf{F}^H\mathbf{G}\left(\mathbf{X}^{m-p} \odot \mathbf{M}^{m-p}\right) + \mathbf{Q}_{KN-\frac{pN}{2}}\mathbf{F}^H\mathbf{G}\left(\mathbf{X}^{m+p} \odot \mathbf{M}^{m+p}\right)$$

$$(8)$$

où $\odot$ est le produit de Hadamard, $\mathbf{F}$ est la matrice de transformée de Fourier discrète de taille $KN\times KN$, $\mathbf{G}$ est une matrice de taille $KN\times N$ représentant l'étalement spectral et la fonction de transfert du filtre prototype dans le domaine fréquentiel, soit :

$$\mathbf{G} = \begin{pmatrix} G_{K-1} & 0 & \cdots & 0 \\ \vdots & G_{K-1} & \ddots & \vdots \\ G_0 & \vdots & \ddots & 0 \\ \vdots & G_0 & \ddots & G_{K-1} \\ G_{-K+1} & \vdots & \ddots & \vdots \\ 0 & G_{-K+1} & \ddots & G_0 \\ \vdots & \ddots & \ddots & \vdots \\ 0 & \cdots & 0 & G_{-K+1} \end{pmatrix}$$

$$(9)$$

$\mathbf{M}^m$ est un vecteur-colonne de taille $N$ qui traduit la modulation OQAM, à savoir un vecteur dont les éléments sont donnés par :

$$M^m[k] = j^{m+k}(-1)^{km}$$

$$(10)$$

et $\mathbf{Q}_\ell$ est une matrice de décalage de $\ell$ échantillons, de taille $KN\times KN$ définie par :

$$\mathbf{Q}_\ell = \begin{pmatrix} \mathbf{0}_{\ell\times(KN-\ell)} & \mathbf{0}_{\ell\times\ell} \\ \mathbf{I}_{KN-\ell} & \mathbf{0}_{(KN-\ell)\times\ell} \end{pmatrix}$$

$$(11)$$

où $\mathbf{I}_{KN-\ell}$ est la matrice identité de taille $(KN-\ell)\times(KN-\ell)$

On comprendra que les termes sous le signe somme dans l'expression (8) représentent les $2K$ - 1 symboles FBMC qui sont combinés en Fig. 3.

Le signal reçu par le récepteur FBMC à l'instant $m$ peut de manière similaire s'exprimer sous la forme d'un vecteur de données en sortie du démodulateur OQAM, noté ici $\mathbf{Y}^m$, de taille $KN$. Le vecteur $\mathbf{Y}^m$ peut s'exprimer en fonction du vecteur $\mathbf{Z}^m$ représentant le signal émis, soit en faisant abstraction du terme de bruit:

$$\mathbf{Y}^m = \left(\mathbf{G}^H\mathbf{F}\mathbf{H}_0\mathbf{Z}^m\right) \odot \mathbf{M}^{m*}$$

$$(12)$$

soit encore, compte tenu du fait que $\mathbf{G}^H\mathbf{FF}^H\mathbf{G}=\mathbf{I}_N$ et que $(\mathbf{X}^m \odot \mathbf{M}^m) \odot \mathbf{M}^{m*} = \mathbf{X}^m$ :

$$\mathbf{Y}^m = \mathbf{H}_0 \left( \mathbf{X}^m + \sum_{p=1}^{K-1} \mathbf{U}^p \left( \mathbf{X}^{m-p} \odot \mathbf{M}^{m-p} \right) \odot \mathbf{M}^{m*} + \sum_{p=1}^{K-1} \mathbf{V}^p \left( \mathbf{X}^{m+p} \odot \mathbf{M}^{m+p} \right) \odot \mathbf{M}^{m*} \right)$$

$$(13)$$

avec :

$$\mathbf{U}^p = \mathbf{G}^H \mathbf{F} \mathbf{Q}^{\frac{pN}{2}} \mathbf{F}^H \mathbf{G} \quad \text{et} \quad \mathbf{V}^p = \mathbf{G}^H \mathbf{F} \mathbf{Q}^{KN-\frac{pN}{2}} \mathbf{F}^H \mathbf{G} \qquad (14)$$

On notera que $\mathbf{G}^H = \mathbf{G}^T$ étant donné que les coefficients de la matrice de transfert du filtre sont réels.
On suppose maintenant que l'on effectue un codage d'Alamouti par blocs, avec une matrice de codage définie par :

$$\overline{\mathbf{C}} = \begin{pmatrix} \overline{\mathbf{X}}_0 & \overline{\mathbf{X}}_1 \\ -\overline{\mathbf{X}}_1\mathbf{T} & \overline{\mathbf{X}}_0\mathbf{T} \end{pmatrix} \qquad (15)$$

Comme décrit ci-après, on peut utiliser un récepteur implémenté dans le domaine fréquentiel (récepteur FS-FBMC) et combiner les deux blocs en sortie du module de FFT (module 170 de la Fig. 1), respectivement lors de la première et de la seconde utilisation du canal.
On note $\mathbf{X}_0^m$ le $m$ème vecteur de données d'entrée du premier bloc $\overline{\mathbf{X}}_0$ et $\mathbf{X}_1^m$ le $m$ème vecteur de données d'entrée du second bloc $\overline{\mathbf{X}}_1$. On note par ailleurs $\mathbf{W}_0^m$ le $m$ème vecteur d'échantillons en sortie du module de FFT, avant désétalement et filtrage, lors de la première utilisation du canal. De manière similaire, on note $\mathbf{W}_1^m$ le $m$ème vecteur d'échantillons en sortie du module de FFT, avant désétalement et filtrage, lors de la seconde utilisation du canal.
Lors de la première utilisation du canal, le vecteur $\mathbf{W}_0^m$ peut s'exprimer comme suit:

$$\mathbf{W}_0^m = \mathbf{H}_0 \left( \mathbf{G}\left(\mathbf{X}_0^m \odot \mathbf{M}^m\right) + \sum_{p=1}^{K-1} \mathbf{A}^p \left( \mathbf{X}_0^{m-p} \odot \mathbf{M}^{m-p} \right) + \sum_{p=1}^{K-1} \mathbf{B}^p \left( \mathbf{X}_0^{m+p} \odot \mathbf{M}^{m+p} \right) \right) +$$

$$\mathbf{H}_1 \left( \mathbf{G}\left(\mathbf{X}_1^m \odot \mathbf{M}^m\right) + \sum_{p=1}^{K-1} \mathbf{A}^p \left( \mathbf{X}_1^{m-p} \odot \mathbf{M}^{m-p} \right) + \sum_{p=1}^{K-1} \mathbf{B}^p \left( \mathbf{X}_1^{m+p} \odot \mathbf{M}^{m+p} \right) \right)$$

$$(16)$$

avec

$$\mathbf{A}^p = \mathbf{F} \mathbf{Q}^{\frac{pN}{2}} \mathbf{F}^H \quad \text{et} \quad \mathbf{B}^p = \mathbf{F} \mathbf{Q}^{KN-\frac{pN}{2}} \mathbf{F}^H \qquad (17)$$

De même, lors de la seconde utilisation du canal, le vecteur $\mathbf{W}_1^m$ peut s'exprimer comme suit :

$$\mathbf{W}_1^m = -\mathbf{H}_0 \left( \mathbf{G}\left(\mathbf{X}_1^{L-1-m} \odot \mathbf{M}^m\right) + \sum_{p=1}^{K-1}\mathbf{A}^p\left(\mathbf{X}_1^{L-1-m+p} \odot \mathbf{M}^{m-p}\right) + \sum_{p=1}^{K-1}\mathbf{B}^p\left(\mathbf{X}_1^{L-1-m-p} \odot \mathbf{M}^{m+p}\right) \right) +$$

$$\mathbf{H}_1 \left( \mathbf{G}\left(\mathbf{X}_0^{L-1-m} \odot \mathbf{M}^m\right) + \sum_{p=1}^{K-1}\mathbf{A}^p\left(\mathbf{X}_0^{L-1-m+p} \odot \mathbf{M}^{m-p}\right) + \sum_{p=1}^{K-1}\mathbf{B}^p\left(\mathbf{X}_0^{L-1-m-p} \odot \mathbf{M}^{m+p}\right) \right)$$

$$(18)$$

expression dans laquelle on a tiré parti du fait que les vecteurs de données d'entrée étaient à valeurs réelles. On notera que les matrices de transfert des canaux élémentaire, $\mathbf{H}_0$ et $\mathbf{H}_1$ sont ici de taille $KN \times KN$ en raison de l'étalement spectral.

Si l'on transforme le bloc de vecteurs $\mathbf{W}_1^m$, $m = 0, ..., L - 1$, par retournement temporel et conjugaison complexe du bloc, le $m^{\text{ème}}$ vecteur du bloc ainsi transformé peut s'écrire, à partir de (18) :

$$\mathbf{W}_1^{L-m-1*} = -\mathbf{H}_0^* \left( \mathbf{G}\left(\mathbf{X}_1^m \odot \mathbf{M}^{L-1-m*}\right) + \sum_{p=1}^{K-1}\mathbf{A}^{p*}\left(\mathbf{X}_1^{m+p} \odot \mathbf{M}^{L-1-m-p*}\right) + \sum_{p=1}^{K-1}\mathbf{B}^{p*}\left(\mathbf{X}_1^{m-p} \odot \mathbf{M}^{L-1-m+p*}\right) \right) +$$

$$\mathbf{H}_1^* \left( \mathbf{G}\left(\mathbf{X}_0^m \odot \mathbf{M}^{L-1-m*}\right) + \sum_{p=1}^{K-1}\mathbf{A}^{p*}\left(\mathbf{X}_0^{m+p} \odot \mathbf{M}^{L-1-m-p*}\right) + \sum_{p=1}^{K-1}\mathbf{B}^{p*}\left(\mathbf{X}_0^{m-p} \odot \mathbf{M}^{L-1-m+p*}\right) \right)$$

$$(19)$$

Soit en tenant compte du fait que :

$$\mathbf{M}^{L-1-m*} = -\mathbf{M}^m j^{L-1} \; ; \; \mathbf{M}^{L-1-m-p*} = -\mathbf{M}^{m+p} j^{L-1} \; ; \; \mathbf{M}^{L-1-m+p*} = -\mathbf{M}^{m-p} j^{L-1}$$

où l'on a supposé que la taille $L$ du bloc était un nombre pair, et que :

$$\mathbf{A}^{p*} = \mathbf{B}^p \; ; \; \mathbf{B}^{p*} = \mathbf{A}^p$$

le vecteur $\mathbf{W}_1^{L-m-1*}$ du bloc retourné peut finalement s'écrire :

$$\mathbf{W}_1^{L-m-1*} = \mathbf{H}_0^* j^{L-1} \left( \mathbf{G}\left(\mathbf{X}_1^m \odot \mathbf{M}^m\right) + \sum_{p=1}^{K-1}\mathbf{B}^p\left(\mathbf{X}_1^{m+p} \odot \mathbf{M}^{m+p}\right) + \sum_{p=1}^{K-1}\mathbf{A}^p\left(\mathbf{X}_1^{m-p} \odot \mathbf{M}^{m-p}\right) \right) -$$

$$\mathbf{H}_1^* j^{L-1} \left( \mathbf{G}\left(\mathbf{X}_0^m \odot \mathbf{M}^m\right) + \sum_{p=1}^{K-1}\mathbf{B}^p\left(\mathbf{X}_0^{m+p} \odot \mathbf{M}^{m+p}\right) + \sum_{p=1}^{K-1}\mathbf{B}^{p*}\left(\mathbf{X}_0^{m-p} \odot \mathbf{M}^{m-p}\right) \right)$$

$$(20)$$

On peut alors estimer les vecteurs de données transmis $\mathbf{X}_0^m$, $\mathbf{X}_1^m$ en effectuant une combinaison des vecteurs $\mathbf{W}_0^m$ et $\mathbf{W}_1^{L-m-1*}$ :

$$\breve{\mathbf{X}}_0^m = \mu \left( \mathbf{H}_0^* \mathbf{W}_0^m + j^{L-1} \mathbf{H}_1 \mathbf{W}_1^{L-1-m*} \right) \qquad (21\text{-}1)$$

$$\breve{\mathbf{X}}_1^m = \mu \left( \mathbf{H}_1^* \mathbf{W}_0^m - j^{L-1} \mathbf{H}_0 \mathbf{W}_1^{L-1-m*} \right) \tag{21-2}$$

où $\mu = \dfrac{1}{Tr\left( \mathbf{H}_0^H \mathbf{H}_0 + \mathbf{H}_1^H \mathbf{H}_1 \right)}$, puis un filtrage et désétalement spectral et enfin d'une démodulation OQAM :

$$\hat{\mathbf{X}}_0^m = \mu \mathbf{G} \left( \mathbf{H}_0^* \mathbf{W}_0^m + j^{L-1} \mathbf{H}_1 \mathbf{W}_1^{L-1-m*} \right) \odot \mathbf{M}^{m*} \tag{22-1}$$

$$\hat{\mathbf{X}}_1^m = \mu \mathbf{G} \left( \mathbf{H}_1^* \mathbf{W}_0^m - j^{L-1} \mathbf{H}_0 \mathbf{W}_1^{L-1-m*} \right) \odot \mathbf{M}^{m*} \tag{22-2}$$

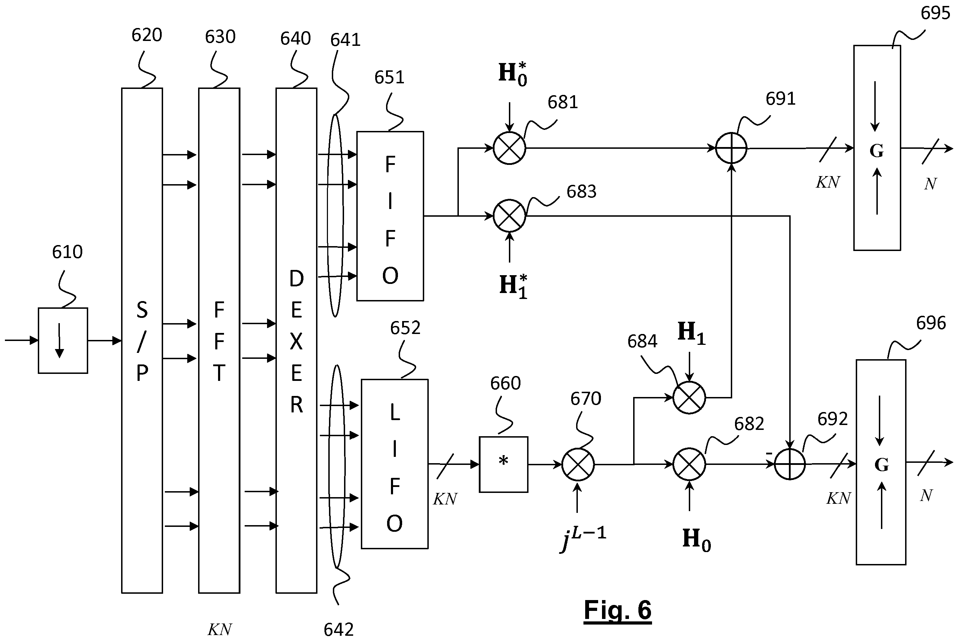

La Fig. 6 représente schématiquement l'architecture d'un récepteur FS-FBMC, permettant de recevoir des séquences de blocs de symboles codés par un codage d'Alamouti par blocs.

Le récepteur comprend un module d'échantillonnage 610 pour échantillonner le signal reçu en bande de base à la cadence $Nf$ où $N$ est le nombre de sous-porteuses et $f$ est la fréquence des symboles FBMC. Les échantillons sont regroupés sous forme de blocs de taille $KN$ par un convertisseur série-parallèle 620.

Le récepteur est supposé être synchronisé sur les symboles FBMC, autrement dit le début d'une fenêtre FFT coïncide avec le premier échantillon d'un symbole FBMC (émis par l'une ou l'autre des antennes d'émission). En outre, le récepteur est supposé être synchronisé sur les instants d'utilisation du canal de sorte qu'il connaît les instants de réception des premier et second blocs.

Les blocs d'échantillons sont soumis à une FFT de taille $KN$ dans le module de FFT 630.

Un démultiplexeur 640 fournit les vecteurs en sortie de la FFT sur une première sortie 641 lors de la première utilisation du canal et sur une seconde sortie 642 lors de la seconde utilisation du canal. Les $L$ vecteurs (de taille $KN$) générés séquentiellement sur la première sortie sont stockés dans une première mémoire tampon 651 configurée sous forme de FIFO. Les $L$ vecteurs générés séquentiellement sur la seconde sortie sont également stockés dans une seconde mémoire tampon 652 configurée sous forme de LIFO. Le module 660 lit ainsi les $L$ vecteurs dans l'ordre inverse de l'ordre de stockage (LIFO), de sorte à effectuer un retournement temporel, et effectue en outre une conjugaison complexe de chacun de ces vecteurs. Un multiplieur 670 multiplie les éléments des vecteurs en sortie du module 660 par $(j)^{L-1}$, autrement dit par $j$ si $L$ est un nombre pair. On pourra notamment choisir $L$ égal à une puissance de 2 : $L = 2^\ell$ avec $\ell$ entier strictement supérieur à 1.

Chaque élément d'un vecteur généré sur la première sortie est multiplié en 681 par le conjugué complexe du coefficient du premier canal élémentaire entre la première antenne d'émission et l'antenne de réception, à la fréquence de la sous-porteuse portant l'élément en question (l'opération est symbolisée ici par une multiplication du vecteur en sortie de la mémoire tampon par la matrice $\mathbf{H}_0^*$ ) et en 683 par le conjugué complexe du coefficient du second canal élémentaire entre la seconde antenne d'émission et l'antenne de réception, à la même fréquence de sous-porteuse (l'opération est symbolisée ici par une multiplication du vecteur d'échantillons en sortie de FFT par la matrice $\mathbf{H}_1^*$ ). Il est entendu que les matrices $\mathbf{H}_0$ et $\mathbf{H}_1$ sont ici de taille $KN \times KN$ et représentent ici les coefficients des canaux élémentaires pour les $KN$ sous-porteuses spectralement étalées. On pourra choisir un coefficient de canal identique pour les $K$ fréquences issues d'une même sous-porteuse. On suppose les matrices $\mathbf{H}_0$ et $\mathbf{H}_1$ constantes sur la durée de la séquence (hypothèse de *flat fading* dans le temps).

De manière similaire, chaque élément d'un vecteur généré sur la seconde sortie est multiplié en 682 par le coefficient du canal entre la première antenne d'émission et l'antenne de réception à la fréquence de la sous-porteuse portant l'élément en question (opération symbolisée par une multiplication du vecteur en sortie de la FFT par la matrice $\mathbf{H}_0$) et en 684 par le coefficient du canal entre la seconde antenne d'émission et l'antenne de réception à la fréquence de la même sous-porteuse (opération symbolisée par une multiplication du vecteur en sortie de la FFT par la matrice $\mathbf{H}_1$).

Les vecteurs en sortie du multiplieur 681 sont sommés, élément à élément, avec ceux en sortie du multiplieur 684, dans le sommateur 691. Les vecteurs successifs, de taille $N$, en sortie du sommateur 691 sont ensuite fournis à un premier module de désétalement spectral et de filtrage 695.

De même, les vecteurs en sortie du multiplieur 682 sont soustraits, élément à élément, avec ceux en sortie du multiplieur 683 dans le sommateur 692. Les vecteurs successifs, de taille $N$, en sortie du sommateur 692 sont ensuite fournis à un second module de désétalement spectral et de filtrage 696.

Les vecteurs obtenus par les premier et second modules 695 et 696 font ensuite l'objet d'une démodulation OQAM (non représentée) pour obtenir les vecteurs de données estimées $\hat{\mathbf{X}}_0^m$ et $\hat{\mathbf{X}}_1^m$, $m = 0,...,L-1$.

La présente invention repose sur le constat que la structure du récepteur de la Fig. 6 peut être simplifiée lorsque l'émetteur FBMC utilise, en lieu et place du codage donné par (15), le codage d'Alamouti par blocs défini par :

$$\overline{\mathbf{C}}' = \begin{pmatrix} \overline{\mathbf{X}}_0 & \overline{\mathbf{X}}_1 \\ -\left(j^{L-1}\right)\overline{\mathbf{X}}_1\mathbf{T} & \left(j^{L-1}\right)\overline{\mathbf{X}}_0\mathbf{T} \end{pmatrix} \qquad (23)$$

Dans ce cas, la multiplication par le facteur $(j^{L-1})$ peut être supprimée à la réception et par conséquent le multiplieur 670 peut être omis.

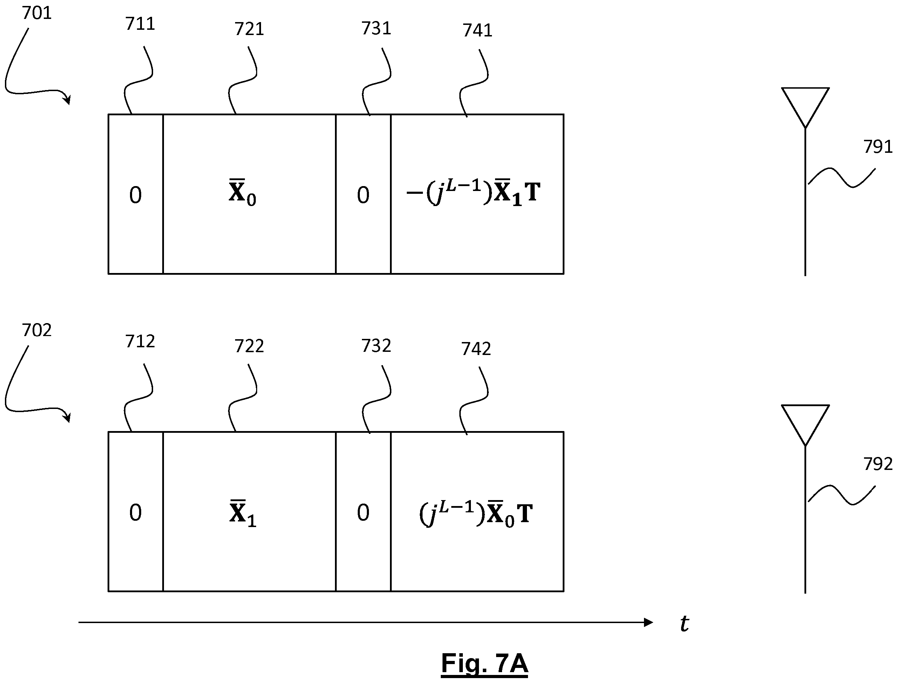

La Fig. 7A représente schématiquement l'émission de deux séquences de blocs de symboles par un émetteur FBMC utilisant un premier codage d'Alamouti par blocs, selon un premier exemple de réalisation de l'invention.

Les blocs de données à émettre sont considérés ici en amont de la modulation OQAM.

Une première séquence de blocs, 701, est formée par un premier bloc de garde 711, un premier bloc de $L$ vecteurs de données d'entrée, $\overline{\mathbf{X}}_0$, 721, un second bloc de garde, 731, suivi par un premier bloc transformé, $-(j^{L-1})\,\overline{\mathbf{X}}_1\mathbf{T}$, 741, obtenu par retournement temporel et multiplication par le facteur $-(j^{L-1})$ du premier bloc de données d'entrée.

Une seconde séquence de blocs, 702, est formée par un premier bloc de garde, 712, un second bloc de $L$ vecteurs de données d'entrée, $\overline{\mathbf{X}}_1$, 722, un second bloc de garde, 732, suivi par un second bloc transformé $\overline{\mathbf{X}}_0\mathbf{T}$, 742, obtenu par retournement temporel et multiplication par le facteur $(j^{L-1})$ du second bloc de données d'entrée.

La taille $L$ des blocs de données est supposée paire, autrement dit $(j^{L-1}) = j$ ou $(j^{L-1})=-j$.

Les blocs de garde sont constitués de vecteurs nuls pour prévenir une interférence entre les blocs de données et les blocs transformés. Le nombre de vecteurs nuls dans les blocs de garde est avantageusement égal à $K + E$ où $K$ est la longueur du filtre prototype et $E$ est l'étalement temporel du canal exprimé en nombre d'échantillons à la fréquence d'échantillonnage ($Nf$).

Les première et seconde séquences sont respectivement transmises par les première et seconde antennes, 791 et 792, après modulation FBMC.

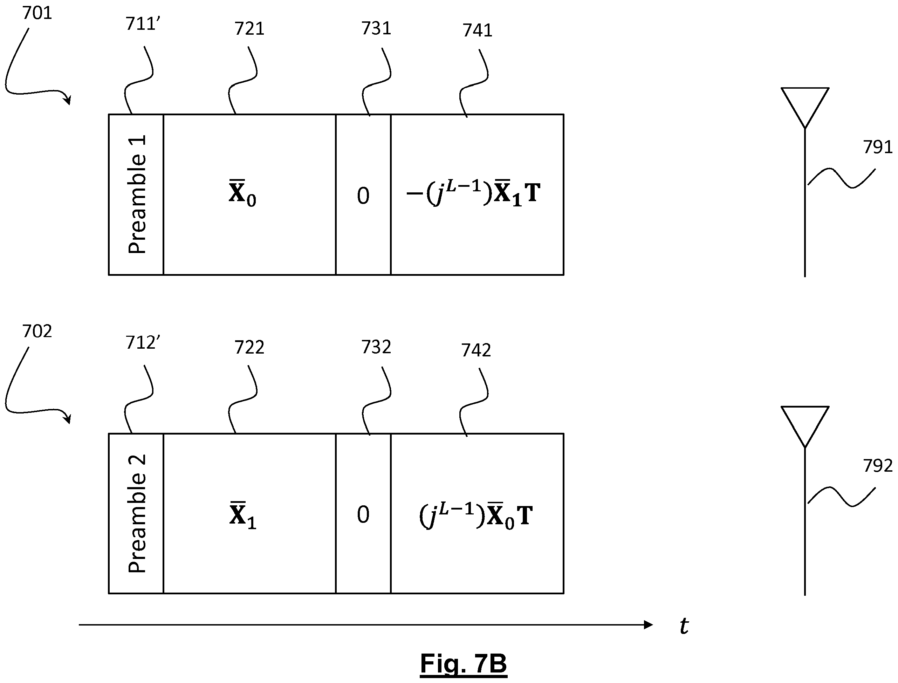

La Fig. 7B représente schématiquement l'émission de deux séquences de blocs de symboles par un émetteur FBMC utilisant un second codage d'Alamouti par blocs, selon un second exemple de réalisation de l'invention.

Le second exemple est identique au premier à la différence près que le premier bloc de garde est remplacé dans la première séquence par un premier préambule 711' et dans la seconde séquence par un second préambule, 712'. Les autres blocs restent inchangés et ne sont donc pas décrits à nouveau.

Les premier et second préambules génèrent une interférence affectant les premiers symboles des blocs $\overline{\mathbf{X}}_0$ et $\overline{\mathbf{X}}_1$, interférence qui n'affecte pas de manière symétrique les blocs $-\overline{\mathbf{X}}_1\mathbf{T}$ et $\overline{\mathbf{X}}_0\mathbf{T}$. Cette dissymétrie ne permet pas d'éliminer l'interférence pour les vecteurs de données d'entrée $\mathbf{X}_0^m$, $\mathbf{X}_1^m$ en début de bloc. Toutefois, les symboles du préambule étant connus du récepteur, il est possible d'éliminer cette interférence dès lors que l'on dispose d'une estimation du canal de transmission.

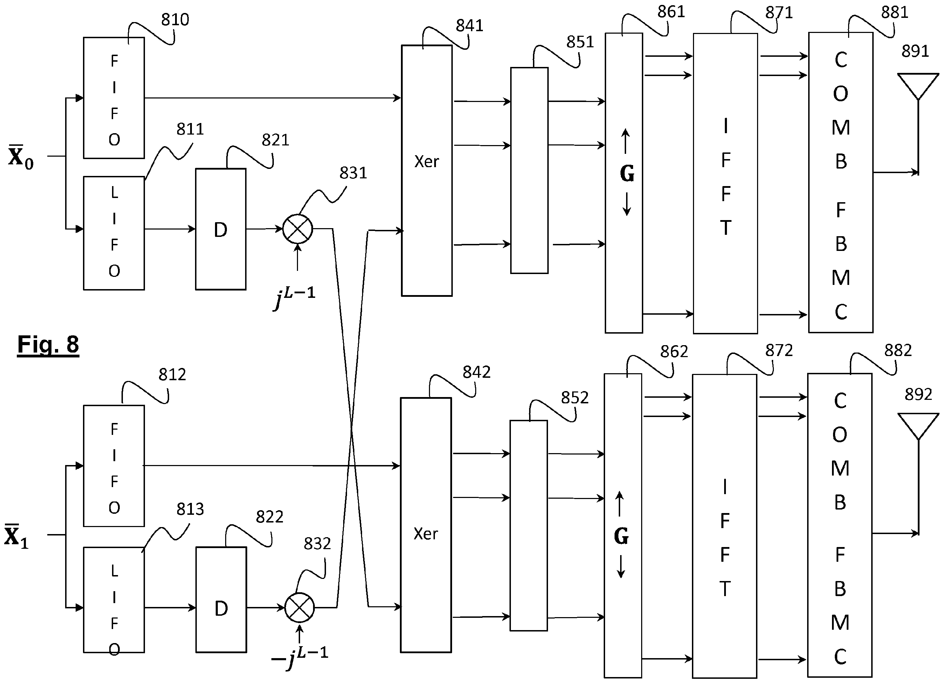

La Fig. 8 représente schématiquement l'architecture d'un émetteur FS-FBMC, selon un premier mode de réalisation de l'invention. Cet émetteur permet d'émettre des séquences de blocs de symboles codés par un codage d'Alamouti selon les Figs. 7A et 7B.

Les blocs de symboles à transmettre sont notés comme précédemment $\overline{\mathbf{X}}_0$ et $\overline{\mathbf{X}}_1$. Les vecteurs de données d'entrée $\mathbf{X}_0^m$ sont stockés dans un buffer FIFO, 810 et un buffer LIFO, 811. Ils sont fournis dans leur ordre d'arrivée au multiplexeur 841 et dans leur ordre inverse au muliplexeur 842, après avoir été retardés par le retard 821 et avoir été multipliés en 831 par le facteur $(j^{L-1})$. De manière similaire, les vecteurs de données d'entrée $\mathbf{X}_1^m$ sont stockés dans un buffer FIFO, 812 et un buffer LIFO, 813. Ils sont fournis dans leur ordre d'arrivée au multiplexeur 842 et dans leur ordre d'arrivée et dans leur ordre inverse au multiplexeur 841, après avoir été retardés par le retard 822 et avoir été multipliés en 832 par le facteur $-(j^{L-1})$. Lors de la première utilisation du canal, les multiplexeurs 841 et 842 commutent les sorties de buffers FIFO, 810 et 811, sur les modules de prétraitement OQAM 851 et 852 respectivement. Lors de la seconde utilisation du canal, les multiplexeurs 841 et 842 commutent les sorties des buffers LIFO, 812 et 813, après retard et multiplication par les facteurs précités, sur les modules prétraitement 852 et 851 respectivement. L'homme du métier comprendra que d'autres implémentations peuvent être envisagées de manière équivalente. En particulier, l'arrangement constitué par 810, 811, 821, pourra être remplacé par une simple mémoire lue dans le sens direct lors de la première utilisation du canal et dans le sens inverse lors de la seconde utilisation du canal, les vecteurs lus lors de la seconde utilisation du canal étant préalablement multipliés par le facteur ($j^{L-1}$) avant d'être fournis au module de prétraitement OQAM 852. De la même façon, l'arrangement constitué par 812, 813, 822, pourra être remplacé par une simple mémoire lue dans le sens direct lors de la première utilisation du canal et dans le sens inverse lors de la seconde utilisation du canal, les vecteurs lus lors de la seconde utilisation du canal étant préalablement multipliés par le facteur -($j^{L-1}$) avant d'être fournis au module de prétraitement OQAM 851.

Les modules 861-862, 871-872, 881-882 sont respectivement identiques aux modules 820, 830, 840 et leur description ne sera donc pas reprise ici. Les signaux en sortie des modules de combinaison 881 et 882 sont translatés en bande RF avant d'être transmis respectivement par les antennes 891 et 892.

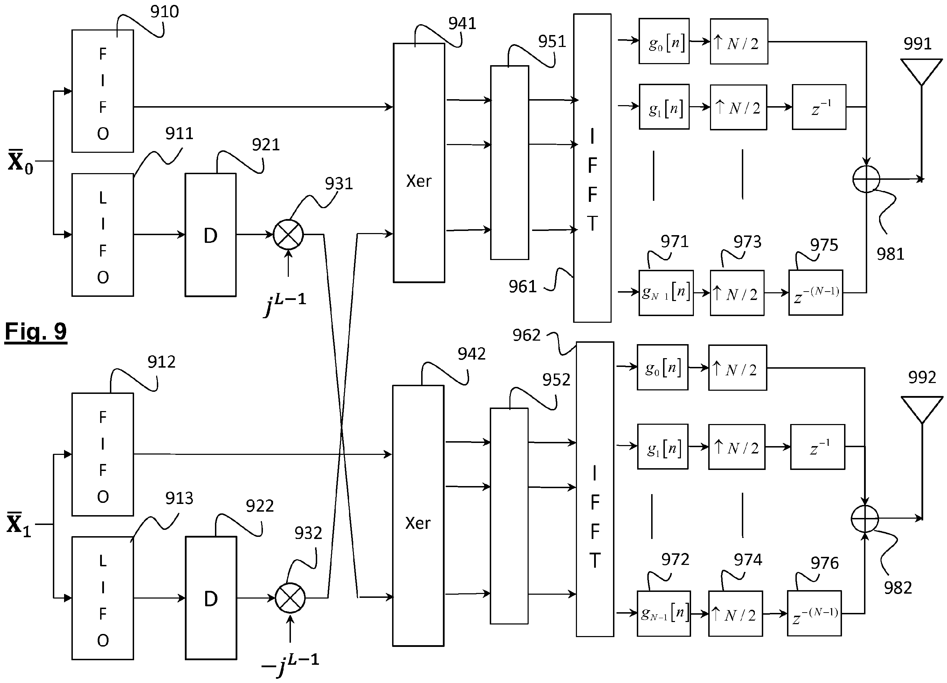

La Fig. 9 représente schématiquement l'architecture d'un émetteur FBMC, selon un second mode de réalisation de l'invention. Cet émetteur diffère de celui de la Fig. 8 dans la mesure où celui-ci est implémenté, de manière conventionnelle, dans le domaine temporel à l'aide d'un réseau polyphasé, comme décrit dans l'article d'Hirosaki précité.

Les éléments référencés 910 à 952 sont respectivement identiques aux éléments 810 à 852.

Plus précisément, l'émetteur comprend deux voies de modulation FBMC. Pour chacune de ces voies, à la différence du premier mode de réalisation, le vecteur de données en sortie du module OQAM est fourni à un banc de filtres de synthèse, constitué par un module IFFT de taille $N$ (961, 962), une pluralité $N$ de filtres polyphasés (971, 972) et une pluralité $N$ de sur-échantillonneurs (981, 982) de facteur $N/2$, en sortie des différents filtres polyphasés et enfin une pluralité de retards arrangés en parallèle et variant de 0 à $N-1$ périodes d'échantillonnage. Les filtres polyphasés sont des versions translatées en fréquence de $2k/T$ du filtre prototype dont la réponse impulsionnelle est de durée $KT$.

Les sous-canaux en sortie de la IFFT sont chacun filtrés par un filtre polyphasé. Les sorties des $N$ filtres polyphasés, sur-échantillonnées et retardées, sont sommées par un additionneur (981, 982). Le signal en sortie de l'additionneur est translaté en bande RF pour fournir un signal d'antenne qui est ensuite émis par l'antenne associée à la voie (991, 992).

## Revendications

1.  Méthode de transmission FBMC d'au moins un premier et un second blocs de symboles ($\overline{\mathbf{X}}_0$, $\overline{\mathbf{X}}_1$), chaque bloc de symboles comprenant une séquence temporelle de $L$ vecteurs réels de taille $N$ prédéterminée, ladite méthode présentant une première et une seconde voies de modulation FBMC, chaque voie de modulation FBMC étant associée à une antenne, dans laquelle,

    - lors d'une première utilisation du canal de transmission, les vecteurs du premier bloc et les vecteurs du second bloc sont respectivement fournis à la première voie de modulation FBMC et à la seconde voie de modulation FBMC, dans l'ordre de ladite séquence temporelle ;

    ladite méthode étant **caractérisée en ce que** :

    - le premier bloc est transformé en multipliant les vecteurs de ce bloc par un facteur $j^{L-1}$ où $L$ est un nombre pair et en inversant l'ordre temporel de la séquence de vecteurs ainsi obtenus, et le second bloc est transformé en multipliant les vecteurs de ce bloc par un facteur $-j^{L-1}$ et en inversant l'ordre temporel de la séquence de vecteurs ainsi obtenus;
    - lors d'une seconde utilisation du canal de transmission, les vecteurs des premier et second blocs ainsi transformés sont respectivement fournis à la seconde voie de modulation et à la première voie de modulation FBMC.

2.  Méthode de transmission FBMC selon la revendication 1, **caractérisée en ce que** chaque voie de modulation FBMC comprend une étape de prétraitement OQAM fournissant des données alternativement réelles et imaginaires, chaque donnée ainsi obtenue étant étalée sur une pluralité $2K-1$ de sous-porteuses adjacentes et filtrée dans le domaine spectral par un filtre prototype pour fournir un vecteur de $KN$ composantes, le vecteur de $KN$ composantes étant soumis à une IFFT de taille $KN$ pour générer un symbole FBMC de $KN$ échantillons, les symboles FBMC consécutifs étant décalés de $N/2$ échantillons, chaque symbole FBMC étant combiné avec les $K-1$ symboles FBMC précédents et les $K-1$ symboles FBMC suivants pour fournir, après translation en bande RF, un signal d'antenne émis par une antenne associée à ladite voie.

3.  Méthode de transmission FBMC selon la revendication 1, **caractérisée en ce que** chaque voie de modulation FBMC comprend une étape de prétraitement OQAM fournissant un vecteur de $N$ composantes alternativement réelles et imaginaires, le vecteur de $N$ composantes étant soumis à une IFFT de taille $N$ pour générer une pluralité de sous-canaux, chaque sous-canal étant filtré par un filtre polyphasé, les filtres polyphasés étant des versions translatées en fréquence de *2k/T* d'un filtre prototype dont la réponse impulsionnelle est de durée *KT* où *T* est la période d'échantillonnage, les sortie des filtres polyphasés étant sur-échantillonnées d'un facteur *N*/2 et retardées de 0 à *N*-1 périodes d'échantillonnage avant d'être sommées pour fournir, après translation en bande RF, un signal d'antenne émis par une antenne associée à ladite voie.

4. Méthode de transmission FBMC selon l'une des revendications précédentes, **caractérisée en ce que** lors de la première utilisation du canal, on fournit un bloc de garde constitué par un nombre prédéterminé de vecteurs nuls aux première et seconde voies de modulation avant de leur fournir respectivement les vecteurs du premier bloc et les vecteurs du second bloc, et que lors de la seconde utilisation du canal, on fournit un bloc de garde constitué par ledit nombre prédéterminé de vecteurs nuls aux première et seconde voies de modulation avant de leur fournir respectivement les vecteurs du second bloc transformé et les vecteurs du premier bloc transformé.

5. Méthode de transmission FBMC selon la revendication 4, **caractérisée en ce que** le nombre prédéterminé de vecteurs nuls est égal à *K* + *E* où *E* est l'étalement temporel du canal de transmission exprimée en nombre d'échantillons.

6. Méthode de transmission FBMC selon l'une des revendications 1 à 3, **caractérisée en ce que** lors de la première utilisation du canal, on fournit des premier et second préambules, constitués par un nombre prédéterminé de vecteurs connus du récepteur, aux première et seconde voies de modulation avant de leur fournir respectivement les vecteurs du premier bloc et les vecteurs du second bloc, et que lors de la seconde utilisation du canal, on fournit un bloc de garde constitué par ledit nombre prédéterminé de vecteurs nuls aux première et seconde voies de modulation avant de leur fournir respectivement les vecteurs du second bloc transformé et les vecteurs du premier bloc transformé.

7. Méthode de transmission FBMC selon la revendication 6, **caractérisée en ce que** ledit nombre prédéterminé est égal à *K* + *E* où *E* est l'étalement temporel du canal de transmission exprimée en nombre d'échantillons.

8. Méthode de transmission FBMC selon l'une des revendications précédentes, **caractérisée en ce que** *L* est une puissance de 2.

9. Emetteur FBMC pour transmettre au moins un premier et un second blocs de symboles ($\overline{\mathbf{X}}_0$, $\overline{\mathbf{X}}_1$), chaque bloc de symboles comprenant une séquence temporelle de *L* vecteurs réels de taille *N* prédéterminée, ledit émetteur comprenant des premiers et des seconds moyens de modulation FBMC, respectivement associés à une première et une seconde antenne de transmission, dans lequel : lors d'une première utilisation du canal de transmission, les vecteurs du premier bloc et les vecteurs du second bloc sont respectivement fournis à la première voie de modulation FBMC et à la seconde voie de modulation FBMC, dans l'ordre de ladite séquence temporelle, **caractérisé en ce que** ledit émetteur comprend :

des premiers moyens de transformation adaptés à transformer le premier bloc en multipliant les vecteurs de ce bloc par un facteur $j^{L-1}$, où *L* est un nombre pair, et en inversant l'ordre temporel de la séquence de vecteurs ainsi obtenus, et

des seconds moyens de transformation adaptés à transformer le second bloc en multipliant les vecteurs de ce bloc par un facteur $-j^{L-1}$ et en inversant l'ordre temporel de la séquence de vecteurs ainsi obtenus ; et que, lors d'une seconde utilisation du canal de transmission, les premiers et seconds moyens de transformation fournissent les vecteurs des premier et second blocs ainsi transformés à la seconde voie de modulation et à la première voie de modulation FBMC.

**Patentansprüche**

1. Verfahren zur FBMC-Übertragung wenigstens eines ersten und eines zweiten Blocks von Symbolen ($\overline{\mathbf{X}}_0$, $\overline{\mathbf{X}}_1$), wobei jeder Block von Symbolen eine zeitliche Sequenz von *L* reellen Vektoren mit vorbestimmter Größe *N* umfasst, wobei das Verfahren einen ersten und einen zweiten FBMC-Modulationsweg aufweist, wobei jeder FBMC-Modulationsweg einer Antenne zugeordnet ist, wobei

- während einer ersten Verwendung des Übertragungskanals die Vektoren des ersten Blocks und die Vektoren des zweiten Blocks dem ersten FBMC-Modulationsweg beziehungsweise dem zweiten FBMC-Modulationsweg in der Reihenfolge der zeitlichen Sequenz zugeführt werden;

wobei das Verfahren **dadurch gekennzeichnet ist, dass**

- der erste Block transformiert wird durch Multiplizieren der Vektoren dieses Blocks mit einem Faktor $j^{L-1}$, wobei $L$ eine gerade Zahl ist, und durch Invertieren der zeitlichen Reihenfolge der Sequenz von derart erhaltenen Vektoren, und der zweite Block transformiert wird durch Multiplizieren der Vektoren dieses Blocks mit einem Faktor - $j^{L-1}$ und durch Invertieren der zeitlichen Reihenfolge der Sequenz von derart erhaltenen Vektoren;
- während einer zweiten Verwendung des Übertragungskanals die derart transformierten Vektoren des ersten und des zweiten Blocks dem zweiten Modulationsweg beziehungsweise dem ersten FBMC-Modulationsweg zugeführt werden.

2. Verfahren zur FBMC-Übertragung nach Anspruch 1, **dadurch gekennzeichnet, dass** jeder FBMC-Modulationsweg einen OQAM-Vorbehandlungsschritt umfasst, der alternativ reelle und imaginäre Daten liefert, wobei jedes derart erhaltene Datenelement auf eine Mehrzahl $2K$ - 1 von benachbarten Unterträgern verteilt wird und in der Spektraldomäne mit einem Prototypfilter gefiltert wird, um einen Vektor mit $KN$ Komponenten zu liefern, wobei der Vektor mit $KN$ Komponenten einer IFFT mit der Größe $KN$ unterzogen wird, um ein FBMC-Symbol mit $KN$ Abtastwerten zu generieren, wobei die aufeinanderfolgenden FBMC-Symbole um $N/2$ Abtastwerte versetzt sind, wobei jedes FBMC-Symbol mit den $K$-1 vorhergehenden FBMC-Symbolen und den $K$-1 folgenden FBMC-Symbolen kombiniert wird, um nach einer Umsetzung ins RF-Band ein Antennensignal zu liefern, das durch eine Antenne emittiert wird, die dem Weg zugeordnet ist.

3. Verfahren zur FBMC-Übertragung nach Anspruch 1, **dadurch gekennzeichnet, dass** jeder FBMC-Modulationsweg einen OQAM-Vorbehandlungsschritt umfasst, der einen Vektor mit $N$ alternativ reellen und imaginären Komponenten liefert, wobei der Vektor mit $N$ Komponenten einer IFFT mit der Größe $N$ unterzogen wird, um eine Mehrzahl von Unterkanälen zu generieren, wobei jeder Unterkanal mit einem Polyphasenfilter gefiltert wird, wobei die Polyphasenfilter Versionen eines Prototypfilters, frequenzumgesetzt um $2k/T$, sind, dessen Impulsantwort eine Dauer $KT$ hat, wobei $T$ die Abtastperiode ist, wobei die Ausgänge der Polyphasenfilter um einen Faktor $N/2$ überabgetastet werden und um 0 bis $N$-1 Abtastperioden verzögert werden, bevor sie summiert werden, um nach einer Umsetzung ins RF-Band ein Antennensignal zu liefern, das durch eine Antenne emittiert wird, die dem Weg zugeordnet ist.

4. Verfahren zur FBMC-Übertragung nach einem der vorhergehenden Ansprüche, **dadurch gekennzeichnet, dass** man während der ersten Verwendung des Kanals einen Schutzblock, gebildet durch eine vorbestimmte Zahl von Nullvektoren, an den ersten und den zweiten Modulationsweg liefert, bevor man ihnen die Vektoren des ersten Blocks beziehungsweise die Vektoren des zweiten Blocks liefert, und dass man während der zweiten Verwendung des Kanals einen Schutzblock, gebildet durch die vorbestimmte Zahl von Nullvektoren, an den ersten und den zweiten Modulationsweg liefert, bevor man ihnen die Vektoren des zweiten transformierten Blocks beziehungsweise die Vektoren des ersten transformierten Blocks liefert.

5. Verfahren zur FBMC-Übertragung nach Anspruch 4, **dadurch gekennzeichnet, dass** die vorbestimmte Zahl von Nullvektoren gleich $K + E$ ist, wobei $E$ die zeitliche Verteilung des Übertragungskanals ist, ausgedrückt als Zahl von Abtastwerten.

6. Verfahren zur FBMC-Übertragung nach einem der Ansprüche 1 bis 3, **dadurch gekennzeichnet, dass** man während der ersten Verwendung des Kanals eine erste und eine zweite Präambel, gebildet durch eine vorbestimmte Zahl von bekannten Vektoren des Empfängers, an den ersten und den zweiten Modulationsweg liefert, bevor man ihnen die Vektoren des ersten Blocks beziehungsweise die Vektoren des zweiten Blocks liefert, und dass man während der zweiten Verwendung des Kanals einen Schutzblock, gebildet durch die vorbestimmte Zahl von Nullvektoren, an den ersten und den zweiten Modulationsweg liefert, bevor man ihnen die Vektoren des zweiten transformierten Blocks beziehungsweise die Vektoren des ersten transformierten Blocks liefert.

7. Verfahren zur FBMC-Übertragung nach Anspruch 6, **dadurch gekennzeichnet, dass** die vorbestimmte Zahl gleich $K + E$ ist, wobei $E$ die zeitliche Verteilung des Übertragungskanals ist, ausgedrückt als Zahl von Abtastwerten.

8. Verfahren zur FBMC-Übertragung nach einem der vorhergehenden Ansprüche, **dadurch gekennzeichnet, dass** $L$ eine Potenz von 2 ist.

**9.** FBMC-Sender zur Übertragung wenigstens eines ersten und eines zweiten Blocks von Symbolen ($\overline{X}_0,\overline{X}_1$), wobei jeder Block von Symbolen eine zeitliche Sequenz von $L$ reellen Vektoren mit vorbestimmter Größe $N$ umfasst, wobei der Sender eine erste und eine zweite FBMC-Modulationseinrichtung umfasst, die einer ersten beziehungsweise einer zweiten Übertragungsantenne zugeordnet sind, wobei:
während einer ersten Verwendung des Übertragungskanals die Vektoren des ersten Blocks und die Vektoren des zweiten Blocks dem ersten FBMC-Modulationsweg beziehungsweise dem zweiten FBMC-Modulationsweg in der Reihenfolge der zeitlichen Sequenz geliefert werden, **dadurch gekennzeichnet, dass** der Sender umfasst:

erste Transformationsmittel, die dazu ausgelegt sind, den ersten Block zu transformieren durch Multiplizieren der Vektoren dieses Blocks mit einem Faktor $j^{L-1}$, wobei $L$ eine gerade Zahl ist, und durch Invertieren der zeitlichen Reihenfolge der Sequenz von derart erhaltenen Vektoren, und
zweite Transformationsmittel, die dazu ausgelegt sind, den zweiten Block zu transformieren durch Multiplizieren der Vektoren dieses Blocks mit einem Faktor $-j^{L-1}$ und durch Invertieren der zeitlichen Reihenfolge der Sequenz von derart erhaltenen Vektoren; und dass
während einer zweiten Verwendung des Übertragungskanals die ersten und die zweiten Transformationsmittel die Vektoren des derart transformierten ersten und zweiten Blocks zu dem zweiten Modulationsweg und zu dem ersten FBMC-Modulationsweg liefern.


## Claims

**1.** A FBMC transmission method for at least a first and a second blocks of symbols ($\overline{X}_0,\overline{X}_1$), each block of symbols comprising a time sequence of $L$ real vectors of predetermined size $N$, said method having a first and a second FBMC modulation pathways, each FBMC modulation pathway being associated with an antenna, wherein

- during a first use of the transmission channel, the vectors of the first block and vectors of the second block are provided to the first FBMC modulation pathway and to the second FBMC modulation pathway, respectively, in the order of said time sequence;

said method being **characterised in that**:

- the first block is transformed by multiplying the vectors of this block by a factor $j^{L-1}$ where $L$ is an even number and by inverting the time order of the sequence of vectors thus obtained, and the second block is transformed by multiplying the vectors of this block by a factor $-j^{L-1}$ and by inverting the time order of the sequence of vectors thus obtained;
- during a second use of the transmission channel, the vectors of the first and second blocks thus transformed are provided to the second modulation pathway and to the first FBMC modulation pathway, respectively.

**2.** The FBMC transmission method according to claim 1, **characterised in that** each FBMC modulation pathway comprises an OQAM preprocessing step providing alternately real and imaginary data, each piece of data thus obtained being spread over a plurality 2K-1 of adjacent sub-carriers and filtered in the spectral range by a prototype filter to provide a vector with $KN$ components, the vector with $KN$ components being subjected to an IFFT having a size $KN$ to generate an FBMC symbol of $KN$ samples, the consecutive FBMC symbols being offset by $N/2$ samples, each FBMC symbol being combined with the $K$-1 previous FBMC symbols and the $K$-1 next FBMC symbols to provide, after RF band translation, an antenna signal emitted by an antenna associated with said channel.

**3.** The FBMC transmission method according to claim 1, **characterised in that** each FBMC modulation pathway comprises an OQAM preprocessing step providing a vector with $N$ alternately real and imaginary components, the vector with $N$ components being subjected to an IFFT having a size $N$ to generate a plurality of subchannels, each sub-channel being filtered by a polyphase filter, the polyphase filters being 2k/T-frequency translated versions of a prototype filter the pulse response of which has a duration $KT$ where $T$ is the sampling period, the outputs of the polyphase filters being oversampled by a factor $N/2$ and delayed by 0 to $N$-1 sampling periods before being summed to provide, after RF band translation, an antenna signal emitted by an antenna associated with said channel.

**4.** The FBMC transmission method according to one of the previous claims, **characterised by**
during the first use of the channel, providing a guard block consisting of a predetermined number of zero vectors to the first and second modulation pathways before providing them the vectors of the first block and the vectors of the second block, respectively, and by
during the second use of the channel, providing a guard block consisting of said predetermined number of zero vectors to the first and second modulation pathways before providing the vectors of the transformed second block and the vectors of the transformed first block to them, respectively.

5. The FBMC transmission method according to claim 4, **characterised in that** the predetermined number of zero vectors is equal to $K + E$ where $E$ is time spread of the transmission channel expressed in number of samples.

6. The FBMC transmission method according to one of claims 1 to 3, **characterised by**
during the first use of the channel, providing first and second preambles, consisting of a predetermined number of vectors known to the receiver, to the first and second modulation pathways before providing the vectors of the first block and the vectors of the second block to them, respectively, and by
during the second use of the channel, providing a guard block consisting of said predetermined number of zero vectors to the first and second modulation pathways before providing the vectors of the transformed second block and the vectors of the transformed first block to them, respectively.

7. The FBMC transmission method according to claim 6, **characterised in that** said predetermined number is equal to $K + E$ where $E$ is time spread of the transmission channel expressed in number of samples.

8. The FBMC transmission method according to one of the previous claims, **characterised in that** L is a power of 2.

9. An FBMC transmitter for transmitting at least one first and a second blocks of symbols ($\overline{\mathbf{X}}_0$, $\overline{\mathbf{X}}_1$), each block of symbols comprising a time sequence of $L$ real vectors having a predetermined size $N$, said transmitter comprising first and second FBMC modulation means, associated with a first and second transmission antenna, respectively, wherein:
during a first use of the transmission channel, the vectors of the first block and the vectors of the second block are provided to the first FBMC modulation pathway and to the second FBMC modulation pathway, respectively, in the order of said time sequence, **characterised in that** said transmitter comprises:

first transformation means adapted to transform the first block by multiplying the vectors of this block by a factor $j^{L-1}$, where $L$ is an even number, and by inverting the time order of the sequence of vectors thus obtained, and second transformation means adapted to transform the second block by multiplying the vectors of this block by a factor $-j^{L-1}$ and by inverting the time order of the sequence of vectors thus obtained; and **in that**,
during a second use of the transmission channel, the first and second transformation means provide the vectors of the first and second blocks thus transformed to the FBMC second modulation pathway and first modulation pathway.

**Fig. 1**

EP 3 232 626 B1

EP 3 232 626 B1

**Fig. 2A**

$d_i[n]$

$d_{i+1}[n]$

$d_{i+2}[n]$

$G_3 d_i[n] + G_1 d_{i-1}[n]$

$G_2 d_i[n] + G_2 d_{i-1}[n]$

$G_1 d_i[n] + G_3 d_{i-1}[n]$

$G_0 d_i[n]$

$G_1 d_i[n] + G_3 d_{i+1}[n]$

$G_2 d_i[n] + G_2 d_{i+1}[n]$

$G_3 d_i[n] + G_1 d_{i+1}[n]$

$G_0 d_{i+1}[n]$

$G_3 d_{i+2}[n] + G_1 d_{i+1}[n]$

$G_2 d_{i+2}[n] + G_2 d_{i+1}[n]$

$G_1 d_{i+2}[n] + G_3 d_{i+1}[n]$

$G_0 d_{i+2}[n]$

$G_1 d_{i+2}[n] + G_3 d_{i+3}[n]$

$G_2 d_{i+2}[n] + G_2 d_{i+3}[n]$

$G_3 d_{i+2}[n] + G_1 d_{i+3}[n]$

**Fig. 2B**

$d_{i,k}^r[n]$

$d_{i+1,k}^r[n]$

$d_{i+2,k}^r[n]$

$d_i^r[n]$

$d_{i+1}^r[n]$

$d_{i+2}^r[n]$

**Fig. 3**

$FBMC_{n-3}$

$FBMC_{n-2}$

$FBMC_{n-1}$

$FBMC_{n}$

$FBMC_{n+1}$

$FBMC_{n+2}$

$FBMC_{n+3}$

$KT$

$T/2$

$\Sigma$

**Fig. 4**

EP 3 232 626 B1

**Fig. 5**

EP 3 232 626 B1

**Fig. 6**

EP 3 232 626 B1

**Fig. 7A**

EP 3 232 626 B1

701

711'    721        731    741

| Preamble 1 | $\overline{\mathbf{X}}_0$ | 0 | $-(j^{L-1})\overline{\mathbf{X}}_1\mathbf{T}$ |

791

702

712'    722        732    742

| Preamble 2 | $\overline{\mathbf{X}}_1$ | 0 | $(j^{L-1})\overline{\mathbf{X}}_0\mathbf{T}$ |

792

$t$

**Fig. 7B**

**Fig. 8**

Fig. 9

EP 3 232 626 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20140348252 A

**Littérature non-brevet citée dans la description**

- **B. HIROSAKI.** An orthogonally multiplexed QAM system using the discrete Fourier transform. *IEEE Trans on Comm.,* Juillet 1981, vol. 29 (7), 982-989
- **P. SIOHAN et al.** Analysis and design of OFDM/OQAM systems based on filterbank theory. *IEEE Trans. on signal processing,* Mai 2002, vol. 50 (5), 1170-1183
- **M. BELLANGER et al.** *FBMC physical layer : a primer, www.ict-phydyas.org*

- **M. RENFORS et al.** A block-Alamouti scheme for filter bank based multicarrier transmission. *Proceedings of European Wireless Conference EW 2010,* 12 Avril 2010, 1031-1037
- A transmit scheme for channels with intersymbol interférence. **E. LINDSKOG et al.** Proc. IEEE of Int'l Conf. on Communications. ICC, Juin 2000, 307-311
- **M. RENFORS et al.** A block-Alamouti scheme for filter bank based multicarrier transmission. *Proc. of 2010 European Wireless Conf.,* 1031-1037